# EUROPEAN PATENT SPECIFICATION

(11) **EP 1 972 902 B1**
(45) Date of publication and mention of the grant of the patent: **01.06.2011**
(21) Application number: 08102738.5
(22) Date of filing: 18.03.2008
(51) Int. Cl.: G01D 5/38

(54) **Photoelectric encoder**
Fotoelektrischer Kodierer
Codeur photoélectrique

(30) Priority: 19.03.2007 JP 2007070199
(43) Date of publication of application: 24.09.2008
(73) Proprietor: Mitutoyo Corporation, Kanagawa 213-8533 (JP)
(72) Inventor: Takahashi, Tomotaka, Kawasaki-shi Kanagawa 213-8533 (JP)
(74) Representative: Skone James, Robert Edmund

(56) References cited:
- EP-A- 0 694 764
- EP-A- 1 382 941
- US-A- 4 542 989

## Description

### TECHNICAL FIELD

The present invention relates to a photoelectric encoder for taking a length measurement by detecting optically a relative displacement of a scale.

### RELATED ART

In the photoelectric encoder, at first a light from a light source such as LED, laser, or the like is irradiated onto a main scale having an optical grid via a spatial filter composed of an optical grid, or the like. Then, this irradiated light is radiated as a diffracted light having position information by the optical grid of the main scale. Since the diffracted light radiated from this main scale generates interference fringes in a space, such interference fringes are received/detected as a phase difference signal by an index scale. Information of an amount of relative movement and a moving direction between a sensor head and the main scale can be derived by analysing the received signal.

In order to get information of the moving direction in addition to an amount of movement, normally the photoelectric encoder detects a 90-degree phase difference two-phase signal by a plurality of scale grids whose phase differences are different mutually, and then calculates an amount of movement and the moving direction by analysing this 90-degree phase difference two-phase signal (see Patent Literature 1).
[Patent Literature 1] Japanese Patent Application Publication No. 7-253334

EP-A-1382941 discloses an optical encoder with a fibre-optic readhead having a plurality of receiver channels with phase masks such that the receiver channels have different spatial phase relationships relative to each other. In different embodiments, examples having three, four or six such channels are disclosed.

US-A-4542989 discloses a position encoder having a holographically recorded single frequency phase grating. The grating is overlapped to provide portions of interference and photodetectors are positioned to provide channels of different phase.

EP-A-0694764 discloses a detector array in the form of an array of elements whose outputs are electrically interconnected so as to form three or more signals displaced from one another in phase by a fixed amount.

However, according to the above conventional detecting methods, when there are a defect in the optical grid of the main scale and a variation in pitching in the length measuring direction, a DC component of the detected signal is varied by the influence of them. As a result, such a problem existed that an error is caused in measuring a length. Also, in the conventional photoelectric encoder, a phase shift depending on a structure or a component quality or a phase shift generated in assembling or adjusting in the fitting takes places. As a result, it was difficult to get precisely the 90-degree phase difference signal. In order to improve the above problems, complicated phase adjusting operations, e.g., the constituent component should be changed every detector, and the like, are needed.

### SUMMARY

It is an object of the present invention to provide a photoelectric encoder capable of reducing a degradation of accuracy in measurement by suppressing a variation of a DC component of a received period signal.

A photoelectric encoder according to the present invention, includes a main scale having a scale grid formed along a length measuring direction; and a sensor head arranged relatively movably in the length measuring direction with respect to the main scale to read the scale grid; wherein the sensor head has a light source for irradiating a light onto the main scale, a first interference fringes detecting photoreceiver portion for receiving interference fringes formed by diffracted lights from the main scale to output a first period signal having a first phase, a second interference fringes detecting photoreceiver portion arranged in a position that is displaced in a direction that intersects orthogonally with the length measuring direction when viewed from the first interference fringes detecting photoreceiver portion, for receiving the interference fringes formed by the diffracted lights from the main scale to output a second period signal having a second phase which is different from the first phase by 180 degree, a third interference fringes detecting photoreceiver portion arranged in a position that is displaced in the length measuring direction when viewed from the first interference fringes detecting photoreceiver portion, for receiving the interference fringes formed by the diffracted lights from the main scale to output a third period signal having a third phase which is different from the first phase by 90 degree, a fourth interference fringes detecting photoreceiver portion arranged in a position that is displaced in a direction that intersects orthogonally with the length measuring direction when viewed from the third interference fringes detecting photoreceiver portion, for receiving the interference fringes formed by the diffracted lights from the main scale to output a fourth period signal having a fourth phase which is different from the first phase by 270 degree, a three-phase signal generating portion for generating three-phase signals, which have a phase difference of 90 degree respectively, based on a difference among the first to fourth period signals, and a two-phase signal generating portion for generating two-phase signals having a phase difference of 90 degree by vector-synthesizing the three-phase signals having the phase difference of 90 degree.

In the photoelectric encoder according to the present invention, the differential signals between the detected signals having a phase difference of 180 degree mutually are derived from the interference fringes detecting photoreceiver portions that are arranged in the direction that intersects orthogonally with the length measuring direction of the main scale, and thus the signals having a phase difference of 90 degree respectively are obtained. Therefore, a variation of a DC component can be suppressed and thus a degradation of accuracy in measurement can be reduced.

In the present invention, the three-phase signal generating portion has a first differential signal generating portion for generating a first differential signal as a difference between the first period signal and the second period signal, a second differential signal generating portion for generating a second differential signal as a difference between the third period signal and the fourth period signal, and an inverted differential signal generating portion for generating an inverted differential signal that is obtained by inverting the second differential signal.

According to the present invention, a variation of the DC component of the received period signal can be suppressed by applying a vector synthesizing process to the detected signal. Therefore, the photoelectric encoder capable of reducing a degradation of accuracy in measurement can be provided.

### BRIEF DESCRIPTION OF THE DRAWINGS

FIG.1A is a plan view of a photoelectric encoder according to an embodiment of the present invention.
FIG.1B is a side view of the photoelectric encoder according to the embodiment of the present invention.
FIG.2 is a schematic view showing configurations of a photoreceiver portion and a signal processing circuit of the photoelectric encoder according to the embodiment of the present invention.
FIG.3 is a vector diagram showing an example of a signal processing by the photoelectric encoder according to the embodiment of the present invention.
FIG. 4 is a vector diagram showing another example of the signal processing by the photoelectric encoder according to the embodiment of the present invention.
FIG.5 is a vector diagram showing an example of a signal by the photoelectric encoder in the prior art.
FIG. 6 is a view showing a Lissajous figure of the example of the signal by the photoelectric encoder in the prior art.
FIG.7 is a vector diagram showing still another example of the signal processing by the photoelectric encoder according to the embodiment of the present invention.
FIG.8 is a view showing a Lissajous figure of another example of a signal processing by the photoelectric encoder according to the embodiment of the present invention.

### DETAILED DESCRIPTION

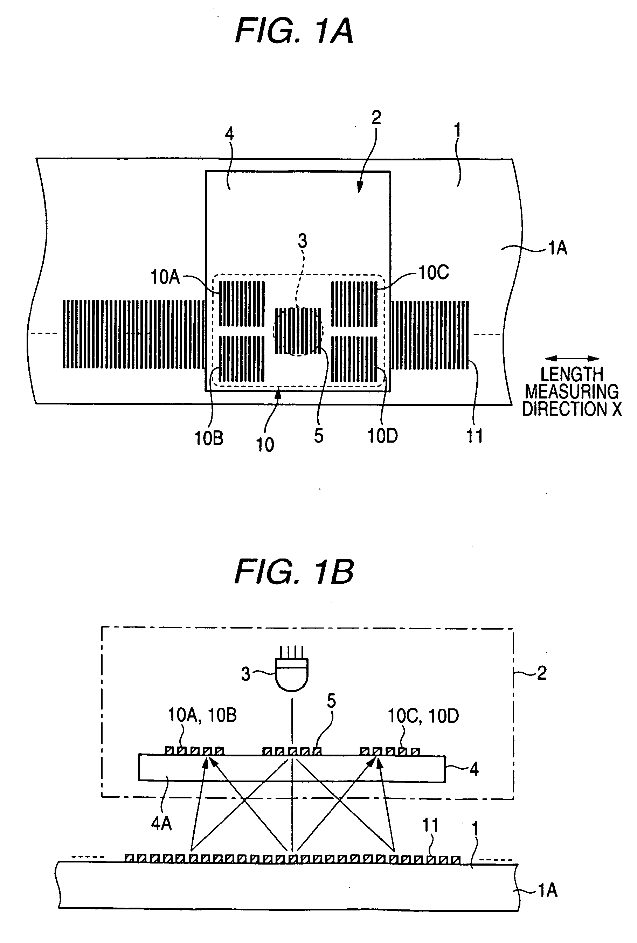

Next, an embodiment of a photoelectric encoder according to the present invention will be explained in detail with reference to the drawings hereinafter. FIG.1 is a schematic view showing a configuration of the embodiment of the present invention.

FIG. 1A and FIG.1B are a plan view of a photoelectric encoder according to an embodiment of the present invention and a side view of the same taken along the direction of the measuring axis X (hereinafter referred as the length measuring direction X) respectively. This photoelectric encoder is constructed by a main scale 1, and a sensor head 2 arranged relatively movably with respect to the main scale 1 in the length measuring direction X. The main scale 1 employs a scale substrate 1A such as a glass substrate, or the like, and is constructed by forming scale grids 11 aligned at a predetermine pitch on this scale substrate 1A.

The sensor head 2 is arranged to oppose to the main scale 1, and has a light source 3, an index scale 4, and a photoreceiver portion 10. The index scale 4 is constructed by using a transparent substrate 4A such as a glass substrate, or the like.

An index grid 5 for transmitting/diffracting a light from the light source 3 is formed on the transparent substrate 4A. Also, a phase detecting portion constituting the photoreceiver portion 10 is formed adjacent to the index grid 5. This photoreceiver portion 10 receives interference fringes of the diffracted lights from the main scale 1, and outputs a plurality of position information signals whose phases are different.

In the embodiment, a light source portion provided in the sensor head 2 is composed of the light source 3 and the index grid 5; however, the light source portion is not limited to this structure. For example, the light source portion may be composed of a point light source (a laser light output from an optical fiber, a surface-emitting laser, or the like).

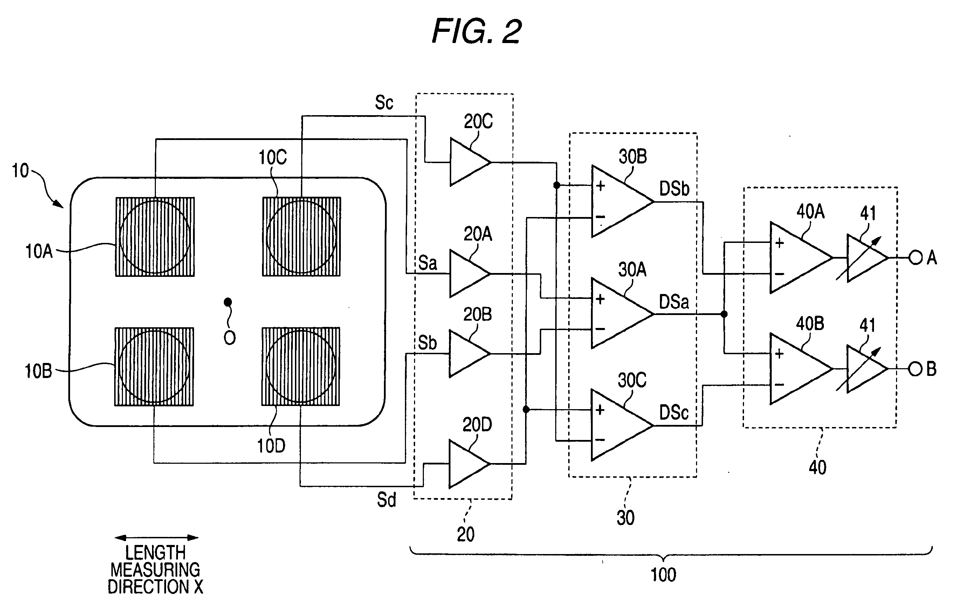

FIG. 2 shows configurations of the photoreceiver portion 10 and a signal processing circuit 100 that derives a 90-degree phase difference two-phase signal by applying a signal processing to the received light of the photoreceiver portion 10.

This photoreceiver portion 10 is a multi-element quadrant sensor and is constructed by first to fourth interference fringes detecting photoreceiver portions 10A to 10D as four sets of phase detecting portions.

The first to fourth interference fringes detecting photoreceiver portion 10A to 10D are the phase detecting portions that are aligned at a predetermined pitch. These first to fourth interference fringes detecting photoreceiver portion 10A to 10D are constructed such that the interference fringes of the diffracted lights whose phases are different every 90 degree respectively can be detected. More particularly, the first interference fringes detecting photoreceiver portion 10A is constructed to detect the interference fringe of the diffracted light having a reference phase (0 °), and is arranged in the upper left area of four partitioned areas in FIG.2. The first interference fringes detecting photoreceiver portion 10A generates a period signal Sa having a reference phase (referred to as a "0 degree" hereinafter) based on the detected interference fringes of the diffracted lights.

The second interference fringes detecting photoreceiver portion 10B is arranged in a position that is displaced downward from the first interference fringes detecting photoreceiver portion 10A in the direction that intersect orthogonally with the length measuring direction X (the lower left area of four partitioned areas in FIG.2). The second interference fringes detecting photoreceiver portion 10B is constructed to detect the interference fringe of the diffracted light whose phase is shifted from the reference phase by 180degree. The second interference fringes detecting photoreceiver portion 10B generates a period signal Sb having an opposite phase of the reference phase (referred to as a "180 degree" hereinafter) based on the detected interference fringes of the diffracted lights.

Also, the third interference fringes detecting photoreceiver portion 10C is arranged in a position that is displaced rightward from the first interference fringes detecting photoreceiver portion 10A in the length measuring direction X (the upper right area of four partitioned areas in FIG.2). The third interference fringes detecting photoreceiver portion 10C is constructed to detect the interference fringe of the diffracted light whose phase is shifted from the reference phase by 90 degree. The third interference fringes detecting photoreceiver portion 10C generates a period signal Sc whose phase is different from the phase of the period signal Sa by 90 degree (referred to as a "90 degree" hereinafter).

Also, the fourth interference fringes detecting photoreceiver portion 10D is arranged in a position that is displaced downward from the third interference fringes detecting photoreceiver portion 10C in the direction that intersect orthogonally with length measuring direction X (the lower right area of four partitioned areas in FIG.2). This fourth interference fringes detecting photoreceiver portion 10D is constructed to detect the interference fringe of the diffracted light whose phase is shifted from the reference phase by 270 degree. The fourth interference fringes detecting photoreceiver portion 10D generates a period signal Sd whose phase is different from the phase of the period signal Sa by 270 degree (referred to as a "270 degree" hereinafter).

The signal processing circuit 100 is constructed by a current/voltage converter portion 20, a three-phase signal generating portion 30, and a two-phase signal generating portion 40.

The current/voltage converter portion 20 is constructed by current/voltage converter circuits 20A to 20D. The interference fringes detecting photoreceiver portions 10A to 10D are connected to the current/voltage converter circuits 20A to 20D respectively.

The three-phase signal generating portion 30 is constructed by differential amplifier circuits 30A to 30C. The current/voltage converter circuits 20A and 20B are connected to the differential amplifier circuit 30A. The current/ voltage converter circuits 20C and 20D are connected to the differential amplifier circuits 30B and 30C. Here, output connections of the current/voltage converter circuits 20C and 20D are inverted in polarity in the differential amplifier circuits 30B and 30C respectively.

The two-phase signal generating portion 40 is constructed by differential amplifier circuits 40A and 40B. The differential amplifier circuits 30A and 30B are connected to the differential amplifier circuit 40A. The differential amplifier circuits 30A and 30C are connected to the differential amplifier circuit 40B. Also, the two-phase signal generating portion 40 has a gain adjusting portion 41.

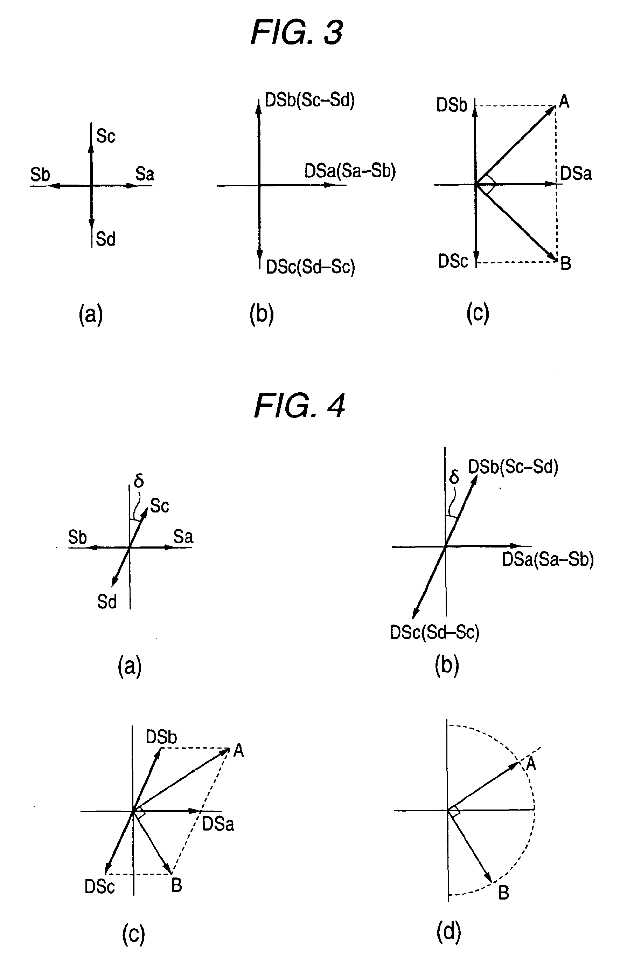

FIG.3(a) is a vector diagram showing a relationship between phases and magnitudes of the period signals Sa to Sd generated by the interference fringes detecting photoreceiver portions 10A to 10D. Also, FIG.3(b) shows a relationship between phases and magnitudes of signals generated in the three-phase signal generating portion 30. FIG.3 (c) shows a relationship between phases and magnitudes of signals generated in the two-phase signal generating portion 40. In this case, explanation and illustration will be given under the assumption that no phase shift is generated among the period signals Sa to Sd.

As described above, the first to fourth interference fringes detecting photoreceiver portions 10A to 10D generate the period signals Sa to Sd respectively. The period signals Sa and Sb are input into the differential amplifier circuit 30A of the three-phase signal generating portion 30 via the current/voltage converter circuits 20A and 20B in FIG.2. The differential amplifier circuit 30A amplifies differentially both input signals Sa, Sb and outputs a first differential signal DSa. This first differential signal DSa is obtained by subtracting the period signal Sa in phase of 0 degree and the period signal Sb in phase of 180 degree. When no phase shift occurs between the period signals Sa and Sb, this first differential signal DSa is the signal having the same phase of 0 degree as the reference phase.

Similarly, the period signals Sc to Sd are input into the differential amplifier circuit 30B of the three-phase signal generating portion 30 via the current/voltage converter circuits 20C and 20D. The differential amplifier circuit 30B amplifies differentially both input signals Sc, Sd and outputs a second differential signal DSb. This second differential signal DSb is obtained by subtracting the period signal Sc in phase of 90 degree and the period signal Sd in phase of 270 degree. When no phase shift occurs between the period signals Sc and Sd, this first differential signal DSb is the signal has a phase difference of 90 degree from the reference phase.

Also, the period signals Sc to Sd are input into the differential amplifier circuit 30C of the three-phase signal generating portion 30 via the current/voltage converter circuits 20C and 20D. The differential amplifier circuit 30C amplifies differentially both input signals Sc, Sd like the differential amplifier circuit 30B, and an output signal DSc is obtained as an inverted differential signal whose phase is different from the second differential signal DSb by 180 degree. That is, the inverted differential signal DSc is the signal that has a phase difference from the reference phase by 270 degree (i.e., -90 degree) . As shown in FIG.3(b), the three-phase signals DSa, DSb, DSc obtained by the three-phase signal generating portion 30 have a phase difference of 90 degree respectively.

Then, the first differential signal DSa and the second differential signal DSb are input into the differential amplifier circuit 40A that the two-phase signal generating portion 40 has. The differential amplifier circuit 40A generates an A-phase signal by synthesizing two input differential signals DSa and DSb in terms of vector. Since the first differential signal DSa having a 0 degree phase and the second differential signal DSb having a 90 degree phase are synthesized in terms of vector, the A-phase signal is the signal having a phase difference of 45 degree from the reference phase.

Similarly, the first differential signal DSa and the inverted differential signal DSc are input into the differential amplifier circuit 40B that the two-phase signal generating portion 40 has. The differential amplifier circuit 40B generates a B-phase signal by synthesizing two input differential signals DSa and DSc in terms of vector. Since the first differential signal DSa having a 0 degree phase and the inverted differential signal DSc having a 270 degree (-90 degree) phase are synthesized in terms of vector like the A-phase signal, the B-phase signal is the signal having a phase difference of 315 degree (i.e., -45 degree) from the reference phase. The A-phase signal and the B-phase signal obtained in this manner has a phase difference of 90 degree, but are equal in their magnitude (see FIG.3(c)).

Next, the case where a phase shift from the period signals Sa, Sb occurs in the period signals Sc, Sd will be explained hereunder. Normally, in the photoelectric encoder, a phase shift may be caused in its output signal (period signal) due to errors in position of the light source, scale grid of the main scale, and the like. FIG. 4 (a) is a vector diagram showing the case where the period signals Sc, Sd further shift in phase by a phase difference δ from the period signals Sa, Sb in a situation that the period signals Sc, Sd have ideally a phase difference of 90 degree from the period signals Sa, Sb. FIG.4(b) shows a relationship between phases and magnitudes among the three-phase differential signals DSa to DSc generated by the three-phase signal generating portion 30. FIG.4(c) shows a relationship between phases and magnitudes among the signals generated in the two-phase signal generating portion 40.

As described above, the period signals Sa to Sd are input into the differential amplifier circuits 30A to 30C of the three-phase signal generating portion 30, and the differential signals DSa to DSc are output. Here, the second differential signal DSb does not have a phase difference of 90 degree from the first differential signal DSa because such differential signal DSb has further a phase shift δ from the differential signal DSa, and thus has a phase difference of (90-δ) degree from the first differential signal DSa. The inverted differential signal DSc generated by the differential amplifier circuit 30C has a phase difference of 180 degree from the second differential signal DSb because such inverted differential signal DSc is obtained by inverting the second differential signal DSb. However, the inverted differential signal DSc has a phase difference of (270-δ) degree from the first differential signal DSa because such inverted differential signal DSc has further a phase shift δ from the first differential signal DSa, like the second differential signal DSb.

As shown in FIG.4(b), since the period signals Sc, Sd have a phase shift δ, the three-phase differential signals DSa to DSc generated by the three-phase signal generating portion 30 do not have a phase difference of 90 degree mutually, and contain a phase shift δ.

Then, out of the three-phase differential signals DSa to DSc having a phase shift δ, the first differential signal DSa and the second differential signal DSb are input into the differential amplifier circuit 40A of the two-phase signal generating portion 40, and are vector-synthesized. Accordingly, as shown in FIG.4(c), the A-phase signal is obtained. Since a process in the two-phase signal generating portion 40 is the vector synthesis, a phase of the A-phase signal is given as (45-δ/2) degree.

Also, the first differential signal DSa and the inverted differential signal DSc are input into the differential amplifier circuit 40B of the two-phase signal generating portion 40 and are vector-synthesized. Thus, the B-phase signal is obtained. Here, a phase of the B-phase signal is given as (135-δ/2) degree.

In this manner, the A-phase signal and the B-phase signal can keep a phase difference of 90 degree even when a phase shift occurs in the original period signals Sa to Sd. That is, even when the period signals Sa to Sd have a phase shift, the A-phase signal and the B-phase signal, which have a phase difference of 90 degree mutually, can be obtained without the phase adjusting operation (see FIG.4(c)).

The process of generating the A-phase signal and the B-phase signal both having a phase difference of 90 degree in the two-phase signal generating portion 40 is the vector synthesis. Therefore, as shown in FIG. 4 (c), the A-phase signal and the B-phase signal have a different signal magnitude respectively. In this case, when the A-phase signal and the B-phase signal are generated and then gains of respective signals A, B are adjusted by the gain adjusting portion 41 provided to the two-phase signal generating portion 40, the A-phase signal and the B-phase signal, which have a phase difference of 90 degree mutually and whose magnitudes are equal, can be generated, as shown in FIG.4(d).

Next, the case where respective quantities of received light of the interference fringes detecting photoreceiver portions 10A to 10D are varied because a defect, an unevenness, or the like is caused in the scale grid 11 of the main scale 1 or a dynamic variation in pitching occurs during the measuring a length, and thus the magnitudes of the period signals Sa to Sd being output from the interference fringes detecting photoreceiver portions 10A to 10D are degraded will be explained hereunder.

In the normal photoelectric encoder, in some case the interference fringes detecting photoreceiver portions for generating signals whose phase is different by 180 degree respectively are arranged on a diagonal line, which passes through an irradiation position of the light source, in the photoreceiver portion. For example, in FIG.2, the interference fringes detecting photoreceiver portion for generating the period signal Sa having a phase of the reference phase (0 degree) is arranged in the position of 10A, and the interference fringes detecting photoreceiver portion for generating the period signal Sb having a phase of 180 degree is arranged in the position of 10D. Also, the interference fringes detecting photoreceiver portion for generating the period signal Sc having a phase of 90 degree is arranged in the position of 10C, and the interference fringes detecting photoreceiver portion for generating the period signal Sd having a phase of 270 degree is arranged in the position of 10B.

When there exists a defect of the scale grid of the main scale or a variation in pitching, the signal being output from the photoreceiver portion is degraded only on one side (e.g., the left side of four partitioned areas in FIG. 2) of the interference fringes detecting photoreceiver portions arranged around the light source.

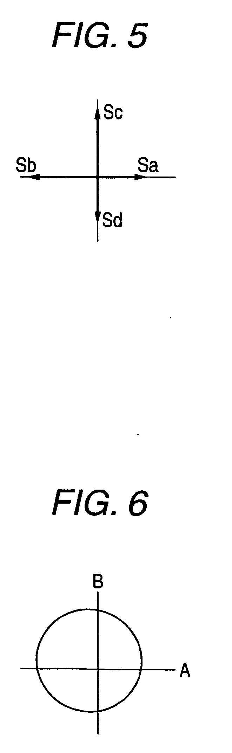

FIG.5 shows a relationship between phases and magnitudes when the degradation occurs in the period signals Sa and Sd out of the period signals Sa to Sd, in the above normal photoelectric encoder. In the normal photoelectric encoder, the interference fringes detecting photoreceiver portion for generating the period signal having a phase of 0 degree is affected by the defect of the scale grid, or the like, and thus the degradation is caused in the period signal Sa having a phase of 0 degree. Similarly, the interference fringes detecting photoreceiver portion for generating the period signal having a phase of 270 degree is affected by the defect of the scale grid, or the like, and thus the degradation is caused in the period signal Sd having a phase of 270 degree.

FIG.6 shows a Lissajous figure depicted based on the A-phase signal and the B-phase signal having a phase difference of 90 degree after the signal processing when the degradation of the period signals Sa and Sd generated by the photoreceiver portions on one side occurs in the normal photoelectric encoder. A variation of DC component occurs in the A-phase signal and the B-phase signal both having a phase difference of 90 degree and generated based on the period signals, in one side of a set of which the degradation occurs and to which the differential amplifying process is applied later. Therefore, a center of the Lissajous figure is deviated. Such occurrence of the DC variation degrades a narrow range precision and interferes with measurement of the photoelectric encoder.

In the present embodiment, the interference fringes detecting photoreceiver portions, which generate the period signal whose phases are different by 180 degree, out of the interference fringes detecting photoreceiver portions 10A to 10D are arranged in the positions that are deviated vertically in the length measuring direction. Even though the defect of the scale grid of the main scale or the variation in pitching occurs and two interference fringes detecting photoreceiver portions on one side (e.g., the interference fringes detecting photoreceiver portions 10A and 10B in FIG. 2) are influenced, the signals that will be subjected to the differential amplifying process are degraded simultaneously. As a result, a DC variation is never generated.

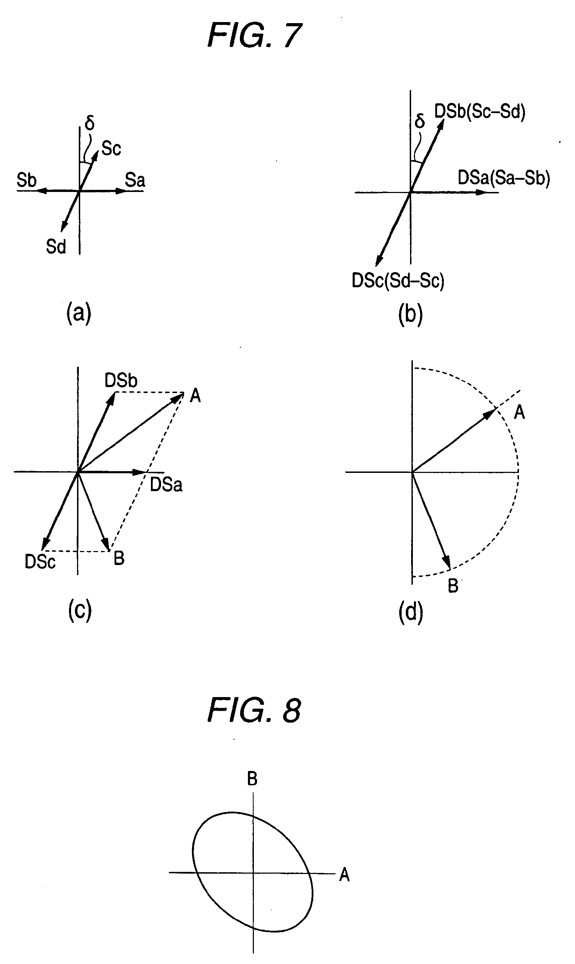

FIG.7 (a) shows phases and magnitudes of the period signals Sa to Sd generated in the first to fourth interference fringes detecting photoreceiver portions 10A to 10D when the defect, or the like occurs in a part of the scale grid 11. FIG. 7(b) shows phases and magnitudes of the differential signals DSa to DSc generated in the period signals Sa to Sd. FIG.7(c) shows phases and magnitudes of the signals generated in the two phase signal generating portion 40. Here, explanation and illustration will be given under the assumption that the period signals Sc and Sd have a phase shift δ with respect to the period signals Sa and Sb.

In the present embodiment, the period signals Sa, Sb are degraded due to the above reason in the first and second interference fringes detecting photoreceiver portions 10A, 10B (see FIG.7(a)). Also, the degradation occurs in the first differential signal DSa that is generated from the period signals Sa, Sb in the three-phase signal generating portion 30. In contrast, the period signals Sc, Sd being output by the third and fourth interference fringes detecting photoreceiver portions 10C, 10D are not degraded. Also, the degradation does not occur in the second differential signal DSb and the inverted differential signal DSc generated from the period signals Sc, Sd in the three-phase signal generating portion 30 (see FIG.7(b)).

Since the three-phase differential signals DSa to DSc output from the three-phase signal generating portion 30 have a phase shift δ respectively and also the first differential signal DSa is degraded, their signal magnitudes are different (see FIG.7(b)). When the three-phase differential signals DSa to DSc are input into the two-phase signal generating portion 40 and synthesized in terms of vector, the A-phase signal and the B-phase signal whose phase difference is not 90 degree are output as outputs, as shown in FIG. 7 (c). Then, gains of the A-phase signal and the B-phase signal are adjusted by the gain adjusting portion 41, and both signals have the equal magnitude (see FIG.7(d)).

FIG.8 shows a Lissajous figure generated based on two signals A, B having a phase difference of 90 degree in the present embodiment. Since a phase difference between the A-phase signal and the B-phase signal is not 90 degree in the Lissajous figure shown in FIG.8, its profile has an elliptic shape but a center of the shape is never displaced.

Even when the degradation occurs in the period signal due to the defect or unevenness existing in the scale grid of the main scale or a variation in pitching, two-phase signals generated by the photoelectric encoder according to the present embodiment do not have exactly a phase difference of 90 degree. However, the degradation (error) of a narrow range accuracy of the detection using the two-phase signals, which are obtained by the photoelectric encoder according to the present embodiment and in which a phase difference occurs, can be reduced by half or less in contrast to the DC variation generated by the situation that a set of photoreceiver portions that execute the differential process are arranged diagonally to the light source in the prior art. For this reason, the photoelectric encoder according to the present embodiment is effective when the defect of the scale grid of the main scale or a variation in pitching is caused.

In this manner, the photoelectric encoder according to the present embodiment adjusts the signal by using the vector synthesis in the signal processing. The three-phase signals having a phase shift are adjusted to have exactly a phase difference of 90 degree in the course of this processing. As a result, two-phase signals having a desired phase difference of 90 degree can be obtained from the three-phase signals having a phase shift, without the phase adjusting operation by using a variable resistor, or the like. Also, the photoelectric encoder according to the present embodiment is effective in a situation that the degradation occurs in the period signal due to the defect or unevenness existing in the scale grid of the main scale or a variation in pitching.

As described above, the signal magnitude of the A-phase signal and the B-phase signal, which is obtained by the photoelectric encoder according to the present embodiment and have a phase difference of 90 degree, is increased up to about √2 times, for both signals are obtained by vector-synthesizing the three-phase differential signals DSa to DSc in the two-phase signal generating portion 40. As a consequence, a signal-to-noise ratio can be improved by 3 dB.

Also, when the gain of the signals is adjusted in the two-phase signal generating portion 40, the two-phase signals having an equal magnitude and having a phase difference of 90 degree can be obtained after the vector synthesis.

With the above, the embodiment of the present invention is explained, but the present invention is not limited to these modes. Various variations, additions, and the like can be applied within the scope of the appended claims.

For example, in some cases an imbalance exists among the period signals Sa to Sd generated by the interference fringes detecting photoreceiver portions 10A to 10D and thus a phase difference occurs after the vector synthesis. In this case, such phase difference can be corrected by providing a gain adjusting portion to the three-phase signal generating portion.
Further, a gain adjusting portion may be provided in the current/voltage converter portion. This structure can obtain the intensities of the respective interference fringe detection signals which are coincident with each other, and the same effect as that of the case where the gain adjusting portion is provided in the three-phase signal generating portion.

As the concrete configuration of the interference fringes detecting photoreceiver portions 10A to 10D used as the phase detecting portion in the embodiment of the present invention, photodiodes having the index scale on their front surfaces, photodiodes connected to optical waveguides formed of fibers and lenses having the index scale on their front surfaces, or a photodiode array in which photodiodes are arranged in grid-like fashion to have a function of the index scale may be employed.

## Claims

1. A photoelectric encoder, comprising:
a main scale (1) having a scale grid (11) formed along a length measuring direction (X); and
a sensor head (2) arranged relatively in the length measuring direction (X) with respect to the main scale (1) to read the scale grid (11);
wherein the sensor head (2) has
a light source (3) for irradiating a light onto the main scale (1),
a first interference fringes detecting photoreceiver portion (10A) for receiving interference fringes formed by diffracted lights from the main scale (1) to output a first period signal (Sa) having a first phase,
a second interference fringes detecting photoreceiver portion (10B) for receiving interference fringes formed by the diffracted lights from the main scale (1) to output a second period signal (Sb) having a second phase which is different from the first phase by 180 degree,
a third interference fringes detecting photoreceiver portion (10C) for receiving interference fringes formed by the diffracted lights from the main scale (1) to output a third period signal (Sc) having a third phase which is different from the first phase by 90 degree, and
a fourth interference fringes detecting photoreceiver portion (10D) for receiving interference fringes formed by the diffracted lights from the main scale, (1) to output a fourth period signal (Sd) having a fourth phase which is different from the first phase by 270 degree,
**characterised in that**:
the second interference fringes detecting photoreceiver portion (10B) is arranged in a position that is displaced in a direction that intersects orthogonally with the length
measuring direction when viewed from the first interference fringes detecting photoreceiver portion;
the third interference fringes detecting photoreceiver portion (10C) is arranged in a position that is displaced in the length measuring direction when viewed from the first interference fringes detecting photoreceiver portion;
the fourth interference fringes detecting photoreceiver portion (10D) is arranged in a position that is displaced in a direction that intersects orthogonally with the length measuring direction when viewed from the third interference fringes detecting photoreceiver portion;
and **in that** the sensor head (2) further comprises:
a three-phase signal generating portion (30) for generating three-phase signals (DSa, DSb, DSc), which have a phase difference of 90 degree respectively, based on a difference among the first to third period signals (Sa,Sb,Sc), and
a two-phase signal generating portion (40) for generating two-phase signals (A,B) having a phase difference of 90 degree by vector-synthesizing the three-phase signals having the phase difference of 90 degree.

2. A photoelectric encoder according to claim 1, wherein the three-phase signal generating portion (30) has
a first differential signal generating portion (30a) for generating a first differential signal as a difference between the first period signal and the second period signal,
a second differential signal generating portion (30B) for generating a second differential signal as a difference between the third period signal and the fourth period signal, and
an inverted differential signal generating portion (30C) for generating an inverted differential signal that is obtained by inverting the second differential signal.

3. An encoder according to claim 1 or claim 2, further comprising:
a gain adjusting portion (41) for adjusting gains of the two-phase signals having the phase difference of 90 degree generated by the two-phase signal generating portion.

4. An encoder according to any of claims 1 to 3, wherein each of the first, second, third and fourth interference fringes detecting photoreceiver portions (10A, 10B, 10C, 10D) has a gain adjusting portion for adjusting a signal intensity.

5. An encoder according to any of claims 1 to 4, further comprising:
a gain adjusting portion for adjusting gains of the three-phase signals (DSa, DSb, DSc), which have a phase difference of 90 degree respectively, generated by the three-phase signal generating portion (30).

## Patentansprüche

1. Fotoelektrischer Codierer, enthaltend:
eine Hauptskala (1), die ein Skalaraster (11) hat, das entlang einer Längsmessrichtung (X) ausgebildet ist; und
einen Sensorkopf (2), der relativ in der Längsmessrichtung (X) im Bezug auf die Hauptskala (1) angeordnet ist, um das Skalaraster (11) zu lesen;
wobei der Sensorkopf (2) enthält:
eine Lichtquelle (3) zum Abstrahlen von Licht auf die Hauptskala (1),
einen ersten Interferenzstreifen-Erfassungsfotoempfängerabschnitt (10A) zum Erfassen von Interterenzstreifen, die durch gebeugtes Licht von der Hauptskala (1) erzeugt werden, um ein erstes Periodensignal (Sa) auszugeben, das eine erste Phase hat,
einen zweiten Interferenzstreifen-Erfassungsfotoempfängerabschnitt (10B) zum Empfangen von Interferenzstreifen, die durch das gebeugte Licht von der Hauptskala (1) erzeugt werden, um ein zweites Periodensignal (Sb) auszugeben, das eine zweite Phase hat, die sich von der ersten Phase um 180° unterscheidet,
einen dritten Interferenzstreifen-Erfassungsfotoempfängerabschnitt (10C), zum Empfangen von Interferenzstreifen, die durch das gebeugte Licht von der Hauptskala (1) erzeugt werden, um ein drittes Periodensignal (Sc) auszugeben, das eine dritte Phase hat, die sich von der ersten Phase um 90° unterscheidet, und
einen vierten Interferenzstreifen-Erfassungsfotoempfängerabschnitt (10D) zum Empfangen von Interferenzstreifen, die durch das gebeugte Licht von der Hauptskala (1) erzeugt werden, um ein viertes Periodensignal (Sd) auszugeben, das eine vierte Phase hat, die sich von der ersten Phase um 270° unterscheidet,
**dadurch gekennzeichnet, dass**:
der zweite Interferenzstreifen-Erfassungsfotoempfängerabschnitt (10B) in einer Position angeordnet ist, die in einer Richtung verschoben ist, die sich orthogonal mit der Längenmessrichtung, von dem ersten Interferenzstreifen-Erfassungsfotoempfängerabschnitt betrachtet, schneidet;
der dritte Interferenzstreifen-Erfassungsfotoempfängerabschnitt (10C) in einer Position angeordnet ist, die in der Längenmessrichtung, von dem ersten Interferenzstreifen-Erfassungsfotoempfängerabschnitt betrachtet, verschoben ist;
der vierte Interferenzstreifen-Erfassungsfotoempfängerabschnitt (10D) in einer Position angeordnet ist, die in einer Richtung verschoben ist, die sich orthogonal mit der Längenmessrichtung, von dem dritten Interferenzstreifen-Erfassungsfotoempfängerabschnitt betrachtet, schneidet:
und **dadurch**, dass der Sensorkopf (2) weiterhin enthält:
einen Dreiphasensignal-Erzeugungsabschnitt (30) zum Erzeugen von Dreiphasensignalen (Dsa, DSb, DSc), die jeweils eine Phasendifferenz von 90° haben, auf der Basis eines Unterschiedes zwischen dem ersten bis dritten Periodensignal (Sa, Sb, Sc), und
einen Zweiphasensignal-Erzeugungsabschnitt (40) zum Erzeugen von Zweiphasensignalen (A, B), die eine Phasendifferenz von 90° haben, durch Vektorsynthetisierung der Dreiphasensignale, die eine Phasendifferenz von 90° haben.

2. Fotoelektrischer Codierer nach Anspruch 1, bei dem der Dreiphasensignal-Erzeugungsabschnitt (30) enthält:
einen ersten Differentialsignal-Erzeugungsabschnitt (30a) zum Erzeugen eines ersten Differentialsignals als eine Differenz zwischen dem ersten Periodensignal und dem zweiten Periodensignal,
einen zweiten Differentialsignal-Erzeugungsabschnitt (30B) zum Erzeugen eines zweiten Differentialsignals als eine Differenz zwischen dem dritten Periodensignal und dem vierten Periodensignal und
einen Umkehrdifferentialsignal-Erzeugungsabschnitt (30C) zum Erzeugen eines umgekehrten Differentialsignals, das man durch Umkehrung des zweiten Differentialsignals erhält.

3. Codierer nach Anspruch 1 oder 2, weiterhin enthaltend:
einen Verstärkungsjustierabschnitt (41) zum Justieren von Verstärkungen der Zweiphasensignale, die die Phasendifferenz von 90° haben und von dem Zweiphasensignal-Erzeugungsabschnitt erzeugt werden.

4. Codierer nach einem der Ansprüche 1 bis 3, bei dem jeder des ersten, zweiten, dritten und vierten Interferenzstreifen-Erfassungsfotoempfängerabschnittes (10A, 10B, 10C. 10D) einen Verstärkungsjustierabschnitt zum Justieren einer Signalintensität hat.

5. Codierer nach einem der Ansprüche 1 bis 4, weiterhin enthaltend:
einen Verstärkungsjustierabschnitt zum Justieren von Verstärkungen der Dreiphasensignale (DSa, DSb, DSc), die jeweils eine Phasendifferenz von 90° haben und von dem Dreiphasensignal-Erzeugungsabschnitt (30) erzeugt werden.

## Revendications

1. Encodeur photoélectrique, comprenant :
une échelle principale (1) comportant une grille d'échelle (11) formée le long d'une direction de mesure de longueur (X) ; et
une tête de capteur (2) agencée relativement dans la direction de mesure de longueur (X) par rapport à l'échelle principale (1) pour lire la grille d'échelle (11) ;
dans lequel la tête de capteur (2) comporte :
une source de lumière (3) pour rayonner une lumière sur l'échelle principale (1),
une première partie de photorécepteur de détection de franges d'interférence (10A) pour recevoir les franges d'interférence formées par les lumières diffractées provenant de l'échelle principale (1) pour délivrer un premier signal périodique (Sa) ayant une première phase,
une deuxième partie de photorécepteur de détection de franges d'interférence (10B) pour recevoir les franges d'interférence formées par les lumières diffractées provenant de l'échelle principale (1) pour délivrer un deuxième signal périodique (Sb) ayant une deuxième phase qui diffère de la première phase de 180 degrés,
une troisième partie de photorécepteur de détection de franges d'interférence (10C) pour recevoir les franges d'interférence formées par les lumières diffractées provenant de l'échelle principale (1) pour délivrer un troisième signal périodique (Sc) ayant une troisième phase qui diffère de la première phase de 90 degrés,
et une quatrième partie de photorécepteur de détection de franges d'interférence (10D) pour recevoir les franges d'interférence formées par les lumières diffractées provenant de l'échelle principale (1) pour délivrer un quatrième signal périodique (Sd) ayant une quatrième phase qui diffère de la première phase de 270 degrés,
**caractérisé en ce que** :
la deuxième partie de photorécepteur de détection de franges d'interférence (10B) est agencée à une position qui est décalée dans une direction qui croise orthogonalement la direction de mesure de longueur lorsqu'elle est vue à partir de la première partie de photorécepteur de détection de franges d'interférence ;
la troisième partie de photorécepteur de détection de franges d'interférence (10C) est agencée à une position qui est décalée dans la direction de mesure de longueur lorsqu'elle est vue à partir de la première partie de photorécepteur de détection de franges d'interférence ;
la quatrième partie de photorécepteur de détection de franges d'interférence (10D) est agencée à une position qui est décalée dans une direction qui croise orthogonalement la direction de mesure de longueur lorsqu'elle est vue à partir de la troisième partie de photorécepteur de détection de franges d'interférence ;
et **en ce que** la tête de capteur (2) comprend en outré
une partie de génération de signaux triphasés (30) pour générer des signaux triphasés (DSa, DSb, DSc), qui ont respectivement une différence de phase de 90 degrés, sur la base d'une différence entre les premier à troisième signaux périodiques (Sa, Sb, Sc), et
une partie de génération de signaux biphasés (40) pour générer des signaux biphasés (A, B) ayant une différence de phase de 90 degrés en synthétisant vectoriellement les signaux triphasés ayant la différence de phase de 90 degrés.

2. Encodeur photoélectrique selon la revendication 1, dans lequel la partie de génération de signaux triphasés (30) comporte :
une première partie de génération de signal différentiel (30a) pour générer un premier signal différentiel en tant que différence entre le premier signal périodique et le deuxième signal périodique,
une deuxième partie de génération de signal différentiel (30B) pour générer un deuxième signal différentiel en tant que différence entre le troisième signal périodique et le quatrième signal périodique, et
une partie de génération de signal différentiel inversé (30C) pour générer un signal différentiel inversé qui est obtenu en inversant le deuxième signal différentiel.

3. Encodeur selon la revendication 1 ou la revendication 2, comprenant en outré :
une partie d'ajustement de gain (41) pour ajuster les gains des signaux biphasés ayant la différence de phase de 90 degrés générés par la partie de génération de signaux biphasés.

4. Encodeur selon l'une quelconque des revendications 1 à 3, dans lequel chacune des première, deuxième, troisième et quatrième parties de photorécepteur de détection de franges d'interférence (10A, 10B, 10C, 10D) comporte une partie d'ajustement de gain pour ajuster une intensité de signal.

5. Encodeur selon l'une quelconque des revendications 1 à 4, comprenant en outre :
une partie d'ajustement de gain pour ajuster les gains des signaux triphasés (DSa, DSb, DSc), qui ont respectivement une différence de phase de 90 degrés, générés par la partie de génération de signaux triphasés (30).
